# EUROPEAN PATENT APPLICATION

(11) **EP 2 597 495 A1**
(43) Date of publication of application: **29.05.2013**
(21) Application number: 11812247.2
(22) Date of filing: 07.07.2011
(51) Int. Cl.: G02B 5/26, B32B 7/02, B32B 27/18, G02B 5/08, G02B 5/28

(54) **NEAR-INFRARED REFLECTIVE FILM AND NEAR-INFRARED REFLECTOR PROVIDED WITH SAME**

(30) Priority: 24.07.2010 JP 2010166592
(71) Applicant: Konica Minolta Holdings, Inc., Tokyo 100-7015 (JP)
(72) Inventor: SUZUKI Shinichi, Hino-shi Tokyo 191-8511 (JP); ARAI Takeo, Hino-shi Tokyo 191-8511 (JP)
(74) Representative: Gille Hrabal
(86) International application number: PCT/JP2011/065570
(87) International publication number: WO 2012/014655

(57) **Abstract**

The present invention provides a near-infrared reflective film and a near-infrared reflector provided with the same, which provide excellent manufacturing cost performance, can be used over large areas, exhibit excellent flexibility, and have high visible light transmittance. The near-infrared reflector is characterized in that, in an infrared film in which high refractive index layers and low refractive index layers are alternately laminated on a support body, the refractive index difference between adjacent high refractive index layers and low refractive index layers is at least 0.3, and at least one of the high refractive index layers and low refractive index layers contains a metal oxide and a polysaccharide thickener.

## Description

### TECHNICAL FIELD

The present invention relates to a near-infrared reflective film of which large size can be easily achieved at a low cost and the optical property and the film property are excellent, and relates to a near-infrared reflector employing the same.

### BACKGROUND OF THE INVENTION

In recent years, in accordance with the high attention for energy saving, there increased has been a desire for a near-infrared reflective film which interrupts transmission of the heat beam of sunlight by laminating the film to a window glass of a building or a vehicle, in order to reduce the load for a cooling equipment

So far, regarding a near-infrared reflective film, there has been proposed a method of manufacturing a laminated film in which a high refractive index film and a low refractive index film area alternately stacked via a dry film forming method, for example, a vacuum evaporation method or a sputtering method. However, the dry film forming method has problems, for example, manufacturing cost is high, formation of large size film is difficult, and a heat resistant material is required as a support since the film is often treated at a higher temperature, because a large scale vacuum apparatus is needed in the dry film forming method.

In order to overcome the above problems, as a method to manufacture a film via a wet coating method, there have been proposed a method to use an ultraviolet ray curable resin (for example, refer to Patent Documents 1 and 2), and a method to carry out alternate lamination using TiO₂ sol/SiO₂ sol (for example, refer to Patent Document 3).

However, when the film forming method using an ultraviolet ray curable resin is adopted, the flexibility of the film is poor since the formed film is too hard, and when the film is formed using a sol, the formed film is brittle since the film is bound only via aggregation of metal oxide particles with each other, handling and conveyance in the firm formation process are difficult, and the productivity is not high. Further, when the film is used as an intermediate film of a sandwich glass, rupture of the film tends to occur when the glass is subjected to bending treatment, whereby the desired property cannot be fully obtained in actual cases.

### PRIOR ART DOCUMENTS

### PATENT DOCUMENTS

Patent Document 1: Japanese Patent Application Publication Open to Public Inspection (hereafter referred to as JP-A) No. 2009-86659
Patent Document 2: JP-A No. 2004-125822
Patent Document 3: JP-A No. 2003-266577

### SUMMARY OF THE INVENTION

### PROBLEMS TO BE SOLVED BY THE INVENTION

In view of the foregoing problems, the present invention was achieved. An object of the present invention is to provide a near-infrared reflective film of which manufacturing cost performance is excellent, large area can be easily attained, flexibility is excellent and the visible light transmittance is high, and to provide a near-infrared reflector equipped with the same.

### MEANS TO SOLVE THE PROBLEMS

In the intensive study to solve the aforementioned problems, the present inventors have found that a near-infrared reflective film having the following features can be obtained, namely, the near-infrared reflective film reflects near-infrared light while keeping transmittance of visible light, exhibits excellent handling property and conveyance property in the manufacturing process, provides an excellent productivity, and is applicable to a laminated glass which is subjected to a bending process, by forming a laminated film in which high refractive index layers and low refractive index layers are alternately stacked using a coating liquid containing metal oxide particles and a viscosity improving polysaccharide for forming at least one of the high refractive index layer and the low refractive index layer, in a wet coating method.

The above problems of the present invention can be overcome by the following structures.
1. A near-infrared reflective film comprising high refractive index layers and low refractive index layers alternately laminated on a support,
   wherein
   a difference in refractive indexes of the high refractive index layer and the low refractive index layer neighboring to each other is 0.3 or more, and
   at least one of the high refractive index layers and the low refractive index layers comprises a metal oxide and a polysaccharide thickener.
2. The near-infrared reflective film of Item 1, wherein the polysaccharide thickener is at least one selected from tamarind seed gum, guar gum, tara gum, locust bean gum and arabinogalactan.
3. The near-infrared reflective film of Item 1 or 2, wherein the high refractive index layer or the low refractive index layer comprising the metal oxide and the polysaccharide thickener further comprises an emulsion resin.
4. The near-infrared reflective film of any one of Items 1 to 3, wherein the high refractive index layer or the low refractive index layer comprising the metal oxide and the polysaccharide thickener comprises two or more kinds of polysaccharides.
5. A near-infrared reflector comprising the near-infrared reflective film of any one of Items 1 to 4 provided on at least one surface of a substrate.

### EFFECT OF THE INVENTION

According to the present invention, a near-infrared reflective film of which manufacturing cost performance is excellent, large area can be easily attained, flexibility is excellent, and the visible light transmittance is high, and a near-infrared reflector equipped with the same could be provided.

### EMBODIMENTS TO CARRY OUT THE INVENTION

The embodiments to carry out the present invention will be explained in detail below.

As the results of intensive studies on the above problems, the present inventors have found that a near-infrared reflective film, of which manufacturing cost performance is excellent, large area can be easily attained, flexibility is excellent, and the visible light transmittance is high, can be achieved by employing a near-infrared reflective film having the following features. Namely, in a near-infrared reflective film in which high refractive index layers and low refractive index layers are alternately stacked on a support, the difference between the refractive indexes of neighboring high refractive index layer and low refractive index layer is 0.3 or more, and at least one of the high refractive index layer and the low refractive index layer contains metal oxide particles and a polysaccharide thickener. Thus, the present invention was achieved.

The constituting elements of the near-infrared reflective film of the present invention and embodiments to carry out the present invention will be explained in detail below.

### <<Near-infrared reflective film>>

The near-infrared reflective film of the present invention is characterized in that the near-infrared reflective film is a multilayer laminate in which a high refractive index layer and a low refractive index layer each having a different refractive index from each other are stacked on a support. The near-infrared reflective film preferably has a transmittance in a visible light region prescribed in JIS R3106-1998 of 50% or more and has a wavelength region in which the reflective index is more than 50% in the region of 900 nm - 1400 nm.

In view of achieving high infrared reflectance with a small number of layers, the difference in refractive index between the high refractive index layer and the low refractive index layer is preferably larger. In the present invention, the near-infrared reflective film has a feature that the difference in refractive index between the neighboring high refractive index layer and low refractive index layer is 0.3 or more. The difference in refractive index is preferably 0.4 or more, and still more preferably 0.45 or more.

The reflectance at a specific wavelength region is determined by the difference in the refractive indexes between neighboring two layers and the number of laminated layers. When the difference in the refractive indexes is larger, the same level of reflectance can be attained with a smaller number of layers. The difference in refractive indexes and the necessary number of layers can be calculated by employing a commercially available software regarding an optical design. For example, when the difference in refractive indexes is less than 0.3, 20 or more of layers becomes necessary to acquire an infrared reflectance of 90% or more, resulting in, not only the degradation of productivity, but also, increased scattering at a lamination interface, deterioration of transparency, and difficulty in manufacturing without any trouble. In view of improving the reflectance and reducing the number of layers, there is no upper limit with respect to the difference in the refractive indexes, however, the upper limit may be practically around 1.40.

Next, the outline of the fundamental constitution of the high refractive index layer and the low refractive index layer of the near-infrared reflective film according to the present invention will be explained.

With respect to the near-infrared reflective film of the present invention, the number of layers of the high refractive index layer and the low refractive index layer is not specifically limited, however, from the aforementioned point of view, the number of layers is preferably 100 or less, more preferably 40 or less, and further more preferably 20 or less.

Further, the near-infrared reflective film of the present invention has a feature that the difference in refractive indexes of the neighboring high refractive index layer and low refractive index layer is 0.3 or more. In the case when a plurality of high refractive index layers and a plurality of low refractive index layers are used as mentioned above, it is preferable that all the refractive layers meet the requirements specified by the present invention. However, the layer on the outermost surface may have a construction which does not meet the condition prescribed in the present invention.

In the near-infrared reflective film of the present invention, the refractive index of the high refractive index layer is preferably from 1.80 to 2.50, and more preferably from 1.90 to 220. The reftactive index of the low refractive index layer is preferably from 1.10 to 1.60, and more preferably from 1.30 to 1.50.

Also, it is preferable, in the near-infrared reflective film of the present invention, that a metal oxide is added at least in the high refractive index layer, and, more preferably, a metal oxide is added in both the high refractive index layer and the low refractive index layer. Further, it is preferable that a polysaccharide thickener is added in at least one of the high refractive index layer and the low refractive index layer, and more preferably it is added in both the high refractive index layer and the low refractive index layer.

In the present invention, the refractive indexes of the high refractive index layer and the low refractive index layer can be determined according to the method described below.

Samples are prepared by singly applying each of the reftactive layer of which refractive index is to be measured on a support. Each of these samples is cut into a size of 10cm × 10cm to measure the refractive index according to the following method. After roughing treatment is conducted on the back surface opposite to the measurement side of each sample, a light absorbing treatment is carried out using a black spray to prevent reflection from the back surface. Using a spectrophotometer U-4000 (produced by Hitachi, Ltd.), the reflectance in visible light region (400 nm - 700 nm) is measured at 25 points of each sample under 5° mirror reflection, and an average value is calculated. An average refractive index is obtained from the result of the measurement.

### [Support]

The support used for the near-infrared reflective film of the present invention is preferable a film support. The film support may be transparent or opaque and a variety of resin films are applicable. Examples of a usable film include: polyolefin films (such as polyethylene and polypropylene), polyester films (such as polyethylene terephthalate and polyethylene naphthalate), polyvinyl chloride, and cellulose triacetate. Among these films, preferable is a polyester film. The polyester film (hereinafter referred to as polyester) is not specifically limited, however, it is preferable that the polyester contains a dicarboxylic acid component and a diol component as main constituting components and has a film forming nature. Specific examples of a dicarboxylic acid component in the main constituting components include: terephthalic acid, isophthalic acid, phthalic acid, 2,6-naphtalene dicarboxylic acid, 2,7-naphthalene dicarboxylic acid, diphenyl sulfone dicarboxylic acid, diphenyl ether dicarboxylic acid, diphenyl ethane dicarboxylic acid, cyclohexane dicarboxylic acid, diphenyl dicarboxylic acid, diphenyl thioether dicarboxylic acid, diphenyl ketone dicarboxylic acid, and phenyl indane dicarboxylic acid. Specific examples of a diol component include: ethylene glycol, propylene glycol, tetramethylene glycol, cyclohexane dimethanol, 2,2-bis(4-hydroxyphenyl) propane, 2,2-bis(4-hydroxyl ethoxy phenyl) propane, bis(4-hydroxy phenyl) sulfone, bisphenol fluorene dihydroxyethyl ether, diethylene glycol, neopentyl glycol, hydroquinone, and cyclohexane diol. Among these polyester, preferable are those having terephtalic acid or 2,6-naphtalene dicarboxylic acid as a dicarboxylic acid component and ethylene glycol or 1,4-cyclohexane dimethanol as a diol component, as main constituting components, in view of transparency, mechanical strength and dimensional stability. Of these, preferable are polyesters containing polyethylene terephthalate or polyethylenenaphthalate as a main constituting component, a copolymer polyester composed of terephthalic acid, 2,6-naphtalene dicarboxylic acid and ethylene glycol, and a mixture of two or more kinds of these polyesters as a main constituting component.

The thickness of the film support according to the present invention is preferably 50 - 300 µm, specifically preferably 80 - 250 µm. Further, the film support of the present invention may be a laminate film of two or more films. In such a case, the kinds of the films may be the same or different.

### [Metal oxide]

As one of the features of the present invention, in the near-infrared reflective film of the present invention, at least one layer of a high refractive index layer and a low refractive index layer may contain a metal oxide together with a polysaccharide thickener.

Examples of a metal oxide according to the present invention include: titanium dioxide, zirconium oxide, zinc oxide, synthetic amorphous silica, colloidal silica, alumina, colloidal alumina, lead titanate, minium, chrome yellow, zinc yellow, chromium oxide, ferric oxide, iron black, copper oxide, magnesium oxide, magnesium hydroxide, strontium titanate, yttrium oxide, niobium oxide, europium oxide, lanthanum oxide, zircon, and tin oxide.

The content of metal oxide is preferably 50% by mass or more but 95% by mass or less, and more preferably 60% by mass or more but 90% by mass or less, based on the total mass of each refractive layer containing a metal oxide. By incorporating 50% by mass or more of a metal oxide, the difference in the refractive indexes between the high refractive index layer and the low refractive index layer can be easily enlarged, and by suppressing the content of a metal oxide by 95% by mass or less, flexibility of the film can be acquired, whereby it becomes easy to form a near-infrared reflective film.

Examples of a metal oxide preferably used in the high refractive index layer of the present invention include: TiO₂, ZnO, and ZrO₂, and more preferable is TiO₂ (titanium dioxide sol) in the view point of the stability of the composition containing metal oxide particles for forming a high refractive index layer, which will be described later. Further, among TiO₂, rutile-TiO₂ is preferred since it exhibits a low catalytic activity, resulting in providing a high environmental resistance to the high refractive index layer or to the adjacent layer, and provides a still higher refractive index.

As a method of preparing a titanium dioxide sol which can be used in the present invention, for example, JP-A No. 63-17221, JP-A No. 7-819, JP-A No. 9-165218 and JP-A No. 11-43327 may be referred to.

Further, as a method of preparing other titanium dioxide sol, for example, JP-A No. 63-17221, JP-A No. 7-819, JP-A No. 9-165218 and JP-A No.11-43327 may be referred to.

The preferable diameter of a primary particle of titanium dioxide particles is from 5 nm to 15 nm, and more preferably from 6 nm to 10 nm.

In the low refractive index layer according to the present invention, silicon dioxide is preferably used as a metal oxide and acidic colloidal silica sol may be more preferably used.

The average particle diameter of silicon dioxide according to the present invention is preferably 100 nm or less. The average primary particle diameter of silicon dioxide dispersed in the state of primary particles (particle diameter in a dispersion liquid before coating) is preferably 20 nm or less, and more preferably 10 nm or less. The average particle diameter of the secondary particles is preferably 30 nm or less, in view of obtaining low haze and excellent visible light transmittance.

The average particle diameter of the metal oxide according to the present invention can be determined by observing the particles itself or the particles which appear in the section or the surface of the refractive layer with an electron microscope to measure the particle diameters of 1,000 arbitrary particles. The average particle diameter can be obtained as the simple arithmetic average value (number average). The diameter of each particle is expressed as the diameter a circle which is assumed to have the same area as the area of the projection of the particle.

### (Addition of Amino acid)

In the present invention, an amino acid is preferably added in order to improve the dispersibility of metal oxide.

The amino acid referred to in the present invention is a compound which has an amino group and a carboxyl group in the molecule. Any type of amino acid, for example, α-, β-, γ- type may be applicable, however, preferable is an amino acid having an ïsoelectric point of 6.5 or less. There are some amino acids which have an optical isomer, however, in the present invention, there is no difference in the effects of optical isomers, and any isomer can be used alone or in a racemic form.

Kagaku Daijiten 1, reduced edition (issued in 1960 byKyoritsu Shuppan), pages 268 - 270 may be referred to for a detailed explanation on an amino acid applicable to the present invention.

Examples of a preferable amino acid in the present invention include: glycine, alanine, valine, α-aminobutyric acid, γ-aminobutyric acid, β-alanine, taurine, serine, ε-amino-n-caproic acid, leucine, norleucine, phenylalanine, threonine, asparagine, aspartic acid, histidine, lysine, glutamine, cysteine, methionine, proline, and hydroxyproline. The amino acid preferably has a solubility at the isoelectric point of 3 g or more in 100 g of water in order to be used as an aqueous solution, examples of which include: glycine, alanine, serine, histidine, lysine, glutamine, cysteine, methionine, proline and hydroxyproline. Since metal oxide particles have a loose hydrogen bond between a binder, serine and hydroxyproline are more preferably used.

### [polysaccharide thickener]

As one of the features of the near-infrared reflective film of the present invention, at least one layer of the high refractive index layer and the low refractive index layer contains a polysaccharide thickener together with a metal oxide.

The polysaccharide thickener which can be used in the present invention is not specifically limited, and there may be cited a commonly known naturally obtained simple polysaccharide, a naturally obtained complex polysaccharide a synthetic simple polysaccharide and a synthetic complex polysaccharide. "Seikagaku Jiten (2nd edition), published by Tokyo Kagaku Dojin" and "Shokuhin Kogyo" vol. 31 (1988), page 21 may be referred to for a detailed explanation on these polysaccharides.

The polysaccharide thickener used in the present invention is a polymer of a sugar and has many hydrogen bond groups in the molecule. The polysaccharide has a characteristic feature that the difference in viscosities at a low temperature and at a high temperature becomes large due to the change in the strength of the hydrogen bond between molecules depending on the temperature. The polysaccharide causes increase in the viscosity at a lower temperature when metal oxide particles are further added, supposed to be due to the hydrogen bond with the metal oxide particles. Applicable is a polysaccharide which causes a range of viscosity increase of 1.0 mPa·s or more at 15 °C, by adding the polysaccharide. The range of viscosity increase is preferably 5.0 mPa·s or more, and still more preferably 10.0 mPa·s or more.

Examples of a polysaccharide thickener applicable in the present invention include: β-1,4-glucan (for example, carboxymethyl cellulose and carboxy ethylcellulose), galactans (for example, such as agarose and agaropectin), galacto manno glycan (for example, such as locust bean gum and guaran), and xyloglucan (for example, such as tamarind gum), gluco mannno glycans (for example, such as arum mannan, wood origin gluco mannan and xanthan gum), galacto gluco manno glycans (for example, such as needle-leaf tree origin glycan), arabino galacto glycan (for example, such as soybean origin glycan and microbe origin glycan), gluco rhamno glycans (for example, such as gellan gum), glycosamino glycans (for example, such as hyaluronic acid and keratan sulfate), alginic acid and alginate, agar, and natural polymer polysaccharides originating in red algae such as κ-carragheenan, λ-carragheenan, ℩-carragheenan and furcelleran. The polysaccharide preferably has a constituting unit which does not contain a carboxylic acid group nor a sulfonic acid group, in view of preventing deterioration of the dispersion stability of the coexisting metal oxide particles in the coating liquid. It is preferable that the polysaccharide is composed only of a pentose such as L-arabitose, D-ribose, 2-deoxyribose or D-xylose, or composed only of a hexose such as D-glucose, D-fructose, D-mannose or D-galactose. Concretely, tamarind seed gum known as xyloglucan having glucose as a main chain and also glucose as a side chain; guar gum known as galacto mannan having mannose as a main chain and glucose as a side chain; locust bean gum; tara gum and arabino galactan having galactan as a main chain and arabinose as a side chain, may be preferably used.

In the present invention, it is further preferable to use two or more kinds of polysaccharide thickeners in combination.

The content of a polysaccharide thickener is preferably 5% by mass or more but 50% by mass or less, and more preferably 10% by mass or more but 40% by mass or less, based on the total mass of the refractive layer in which the polysaccharide thickener is added. However when it is used in combination with a water soluble polymer or an emulsion resin, the content may be 3% by mass or less. When the content of the polysaccharide thickener is too small, the layer surface tends to become roughened while being dried, whereby the transparency tends to be degraded. On the other hand, when the content is 50% by mass or less, the relative content of the metal oxide may become suitable, whereby it becomes easier to enlarge the difference in the refractive indexes between the high refractive index layer and the low refractive index layer.

### [Water soluble polymer]

In the refractive layer according to the present invention, a water soluble polymer such as polyvinyl alcohol may be used in combination with themetal oxide and the polysacccharide thickener.

The water soluble polymer referred to in the present invention is defined as a polymer in which, when the water soluble polymer is dissolved in water at a concentration of 0.5% by mass at a temperature exhibiting the largest solubility of the polymer, and is filtered with G2 glass filter (the maximum pore size is from 40 to 50 µm), the mass of the insoluble material separated by filteration is 50 % by mass or less based on the mass of the added water soluble polymer.

A synthetic polymer may be cited as a water soluble polymer usable in the present invention, examples of which include: polyvinyl alcohols; polyvinyl pyrrolidones; acrylic resins such as a polyacrylic acid, an acrylic acid-acrylonitrile copolymer, a potassium acrylate-acrylonitrile copolymer, a vinyl acetate-acrylic ester copolymer, or an acrylic acid-acrylic ester copolymer, styrene-acrylic acid ester resins such as a styrene-acrylic acid copolymer, a styrene-methacrylic acid copolymer, a styrene-methacrylic acid-acrylic acid ester copolymer, a styren-α-methyl styrene-acrylic acid ester copolymer or a styrene-α-methyl styrene-acrylic acid-acrylic acid ester copolymer, a styrene-sodium styrenesulfonate copolymer, a styrene-2-hydroxyethyl acrylate copolymer, a styrene-2-hydroxyethyl acrylate-potassium styrene sulfonate copolymer, a styrene-maleic acid copolymer, a styrene-maleic anhydride copolymer, a vinyl naplsthalene-acrylic acid copolymer, a vinyl naphthalene-maleic acid copolymer, vinyl acetate-containing copolymers such as a vinyl acetate-maleate copolymer, a vinyl acetate-crotonic acid copolymer, and a vinyl acetate- acrylic acid copolymer.; and the salts thereof Of these, polyvinyl alcohol, polyvinyl pyrrolidones and copolymer containing thereof may be cited as specifically preferable examples.

The weight average molecular weight of a water soluble polymer is preferably 1,000 or more but 200,000 or less, and more preferably 3,000 or more, but 40,000 or less.

As polyvinyl alcohols preferably used in the present invention, modified polyvinyl alcohols such as a cation modified polyvinyl alcohol in which the end is cation modified or an anion modified polyvinyl alcohol which has an anionic group may also be included, other than the usual polyvinyl alcohol obtained by hydrolyzing polyvinyl acetate.

With respect to the polyvinyl alcohol obtained by hydrolyzing vinyl acetate, preferably used is one having an average polymerization degree of 1,000 or more and specifically preferably used is one having an average polymerization degree of from 1,500 to 5,000. Further, the saponification degree of the polyvinyl alcohol is preferably from 70 to 100%, and specifically preferably from 80 to 99.5%.

The cation modified polyvinyl alcohol is one which has a primary - tertiary amino group or a quarterly ammonium group in the main chain or the side chain of the aforementioned polyvinyl alcohol, for example disclosed in JP-A No. 61-10483, which can be obtained by saponifying a copolymer of an ethylenically unsaturated monomer and a vinyl acetate which has a cationic group.

Examples of an ethylenically unsaturated monomer having a cationic group include: trimethy-(2-acrylamide-2,2-dimethylethyl)ammonium chloride, trimethyl-(3-acrylamido-3,3-dimethylpropyl) ammonium chloride, N-vinylimidazole, N-vinyl-2-methylimidazole, N-(3-dimethylamino propyl) methacylamide, hydroxylethyl trimethyl ammonium chloride, trimethyl-(2-methaayamide propyl) ammonium chloride, and N-(1,1-dimethyl-3-dimethylamino propyl) acrylamide. The ratio of the monomer containing the cation modified group in the cation modified polyvinyl alcohol is from 0.1 to 10 mol %, and preferably from 0.2 to 5 mol% based on the vinyl acetate.

Examples of an anion modified polyvinyl alcohol include: a polyvinyl alcohol having an anionic group as described in JP-A No. 1-206088, a copolymer of vinyl alcohol and vinyl compound having a water soluble group as described in JP-ANo. 61-237681 and JP-ANO. 63-307979, and a modified polyvinyl alcohol having a water soluble group as described in JP-ANo. 7-285265.

Examples of a nonion modified polyvinyl alcohol include: a polyvinyl alcohol derivative in which a polyalkylene oxide group is added to a part ofvinyl alcohol as described in JP-ANo. 7-9758, anda a block copolymer of a vinyl compound having a hydrophobic group and a vinylalcohol as described in JP-A No. 8-25795. Two or more kinds of polyvinyl alcohols having different degrees of polymerization or different kinds of modification may also be used in combination.

When a water soluble polymer is used in the present invention, a hardener may also be used. In the case when the water soluble polymer is a polyvinyl alcohol, a boric acid and a salt thereof, or an epoxy hardener may be preferably used.

### [Emulsion resin]

In the present invention, it is preferable that the high refractive index layer or the low refractive index layer of the present invention, which includes metal oxide particles and a viscosity improving polysaccharide, further contains an emulsion resin.

The emulsion resin referred to in the present invention is an emulsion polymerized resin using a polymerization initiator while maintaining an oil-soluble monomer in an emulsion state in an aqueous solution containing a dispersing agent.

Examples of a dispersing agent used at the time of emulsion polymerization of the emulsion include: in general, low-molecular dispersing agents such as alkyl sulfonates, alkyl benzene sulfonates, diethylamine, ethylenediamine and quaternary ammonium salts, and also include: high-molecular dispersing agents such as polyoxyethylene nonyl phenyl ether, polyoxyethylene lauryl ether, hydroxyethyl cellulose and polyvinyl pyrrolidone.

The emulsion resin according to the present invention is a resin which is dispersed in an aqueous medium as minute resin particles in an emulsion state (the average particle diameter is from 0.01 to 2 µm), which is obtained by emulsion polymerizing an oil-soluble monomer using a polymer dispersion agent having a hydroxyl group. Fundamentally, the polymer component of the obtained emulsion resin does not depend on the kind of used dispersing agent. However, when emulsion polymerization is carried out using a polymer dispersing agent having a hydroxyl group, it is assumed that a hydroxyl group is present at least on the surface of the minute particle, whereby the chemical or physical property of the emulsion becomes different from those of an emulsion resin polymerized by using other dispersing agent

A polymer dispersing agent containing a hydroxyl group means a polymer dispersing agent having a weight average molecular weight of 10000 or more, in which a hydroxyl group is introduced on the side chain or at the terminal, examples of which include: acrylic polymers, for example, sodium polyacrylate and polyacrylamide, in which 2-ethylhexyl acrylate is copolymerized, polyethers, for example, polyethylene glycol and polypropylene glycol; and polyvinyl alcohol. Of these, specifically preferable is polyvinyl alcohol.

The polyvinyl alcohol used as a polymer dispersing agent includes, in addition to the common polyvinyl alcohol obtained by hydrolyzing a polyvinyl acetate, modified polyvinyl alcohols, for example, a cationically modified polyvinyl alcohol, anionically modified polyvinyl alcohol having an anionic group such as a carboxyl group, and a silyl modified polyvinyl alcohol having a silyl group. A polyvinyl alcohol having a higher average polymerization degree has a higher effect to prevent cracks when an ink absorbing layer is formed, however, when the average polymerization degree is 5000 or less, handling becomes easier because the viscosity of the emulsion resin is not too high. Therefore, the average polymerization degree is preferably from 300 to 5000, more preferably from 1500 to 5000, and specifically preferably from 3000 to 4500. The saponification degree of the polyvinyl alcohol is preferably from 70 to 100%, and more preferably from 80 to 99.5%.

As a resin obtained via emulsion polymerization using aforementioned polymer dispersing agent, cite may be a singly polymerized compound or a copolymerized compound of ethylenical monomers such as an acrylic ester, a methacrylic ester, a vinyl compound and a styrene compound; and dien compounds such as butadiene and isoprene. For example, an acrylic resin, a styrene-butadiene resin and ethylene-vinyl acetate resin may be cited.

Next, an example of manufacturing an emulsion resin will be shown below.

The pH value of 400 g of a 5% aqueous polyvinyl alcohol (PVA) solution (polymerization degree: 1700 and saponification degree: 88.5 mol%) was adjusted to 3.5. While stirring, 50 g of methyl methacrylate and 50 g of butylacrylate were added to the solution, and, after raising the temperature to 60 °C, 10 g of 5% ammonium persulfate was added to start polymerization. From after 15 minutes, 100 g ofmethyl methacrylate and 100 g of butylacrylate were slowly added spending 3 hours. After 5 hours, the product was cooled when the polymerization ratio reached 99.9%, and neutralized to pH 7.0 to obtain an emulsion resin (1). The obtained emulsion resin was dried in a vacuum dryer at 60 °C, and the Tg value was determined to be 5 °C using a differential scanning calorimeter. According to the similar method, exemplified emulsion resins (2) to (14) shown in Table 1 were synthesized.

**Table 1**

| No | Monomer | Dispersant | Tg (°C) | Solid content (%) |
|---|---|---|---|---|
| (1) | Methyl methacrylate + butyl acrylate | PVA(Polymerization degree 1700, Saponification degree 88.5%) | 5 | 44 |
| (2) | Methyl methacrylate+butyl acrylate | PVA(Polymerization degree 500, Saponification degree 88.5%) | 5 | 44 |
| (3) | Methyl methacrylate + 2-ethylhexylacrylate | PVA(Polymerization degree 1700, Saponification degree 88 5%) | -10 | 44 |
| (4) | Methyl methacrylate + 2-ethylhexyl acrylate | PVA(Polymerizationdegree 1700, Saponification degree 98 5%) | -10 | 44 |
| (5) | Methyl methacrylate+butyl acrylate | PVA(Polymerization degree 1700, Saponification degree 88.5%) | 15 | 44 |
| (6) | Styrene + butadiene | PVA(Polymerization degree 1700, Saponification degree 98.5%) | 0 | 44 |
| (7) | Styrene + butadiene | PVA(Polymerization degree 500, Saponification degree 88.5%) | 0 | 44 |
| (8) | Ethylene + vinyl acetate | PVA(Polymerization degree 1700, Saponification degree 88.5%) | 5 | 44 |
| (9) | Ethylene + vinyl acetate | PVA(Polymerization degree 500, Saponification degree 88.5%) | 5 | 44 |
| (10) | Methyl methacrylate + butyl acrylate | PVA(Polymerization degree 1700, Saponification degree 88.5%) | 30 | 44 |
| (11) | Methyl methacrylate + butyl acrylate | PVA(Polymerization degree 3500, Saponification degree 88.5%) | 0 | 30 |
| (12) | Methyl methacrylate + butyl acrylate | PVA(Polymerization degree 3500, Saponification degree 88 5%) | -30 | 30 |
| (13) | Styrene + butadiene | Sodium alkylbenzene sulfonate | 0 | 44 |
| (14) | Methyl methacrylate + 2-ethylhexyl acrylate | Sodium alkylbenzene sulfonate | -10 | 44 |

### [Other additives in Retractive layer]

A variety of additives may be added to the high refractive index layer and the low refractive index layer according to the present invention.

Various well-known additives may be contained, examples of which include: ultraviolet absorption agents such as described in JP-A No. 57-74193, JP-A No. 57-87988 and JP-A No. 62-261476; fading inhibitors such as described in JP-A No. 57-74192, JP-ANo. 57-87989, JP-ANo. 60-72785, JP-A No. 61-146591, JP-A No. 1-95091 and JP-A No. 3-13376; anionic, cationic or nonionic surfctants, optical whitening agents such as described in JP-A No. 59-42993, JP-A No. 59-52689, JP-A No. 62-280069, JP-ANo. be-242871, and JP-A No. 4-219266; pH adjusters such as sulfuric acid, phosphoric acid, acetic acid, citric acid, sodium hydroxide, potassium hydroxide and potassium carbonate; defoaming agents; lubricants such as diethylene glycol; antiseptic agents; antistatic agents; and mattting agents.

### [Manufacturing method of Near-infrared reflective film]

High refractive index layers and low refractive index layers are alternately coated and dried on a support to obtain a laminate of the near-infrared reflective film of the present invention.

Examples of a preferably applied coating method include: a roll coating method, a rod bar coating method, an air knife coating method, a spray coating method, a curtain coating method, a slide bead coating method using a hopper as described in United States Patent Nos. 2,761,419 and 2,761,791, and an extrusion coating method.

The viscosity of the high refractive index layer coating liquid and the low refractive index layer coating liquid for a simultaneous multilayer coating via a slide bead coating method is preferably in the range of 5 to 100 mPa·s, and more preferably in the range of 10 to 50 mPa·s. When a curtain coating method is employed, the viscosity is preferably in the range of 5 to 1200 mPa·s, and more preferably in the range of 25 to 500 mPa·s.

The viscosity of the coating liquid at 15 °C is preferably 100 mPa·s or more, more preferably from 100 to 30,000 mPa·s, further more preferably from 3,000 to 30,000, and most preferably from 10,000 to 30,000 mPa·s.

In the present invention, the viscosity of the high refractive index layer coating liquid and the low refractive index layer coating liquid may be measured by using, for example, B type viscometer BL, produced by TOKYO KEIKI, INC.

As the coating and drying melhod, it is preferable that the high refractive index layer coating liquid and the low refractive index layer coating liquid are warmed to 30 °C or more to coat, cooled once to a temperature of from 1 to 15 °C, and then dried at above 10 °C. More preferably, the drying process is conducted under the condition of the wet-bulb temperature of 5 to 50 °C, and the layer surface temperature of 10 to 50 °C. The cooling just after coating is preferably conducted via a horizontal set process, in view of the uniformity of the formed layer.

### [Application of Near-infrared reflective film]

The near-infrared reflective film of the present invention is applicable to a variety of fields. For example, it may be used to improve weather resistance such as for a pasting film on a window glass as a heat reflecting film to provide a heat reflecting effect, or for a film used in the vinyl house for agriculture, by pasting the film on a facility exposed to the sunlight for a long time, for example, out door window of a building or a automobile window.

Specifically, the near-infrared reflective film of the present invention can be suitably used for a component in which the near-infrared reflective film of the present invention is adhered to the glass or to a resin substrate altermate to the glass, directly or via an adhesive.

The adhesive is provided so that the near-infrared reflective film is on the incident side of sunlight (heat ray). It is also preferable to sandwich the near-infrared reflective film between a window glass and a substrate, since circumference gas such as moisture can be sealed, whereby durability is improved. Providing the near-infrared reflective film of the present invention in outdoor or the outside of a vehicle (for pasting on outside) is also preferable in view of improving environmental resistance.

As an adhesive usable in the present invention, one containing a resin having a photo-curable property or a thermo-curable property as a main component may be used.

An adhesive which has durability for ultraviolet rays is preferably used, and an acrylic adhesive or a silicone adhesive is preferable. Further preferable is an acrylic adhesive in view of the adhesive property and cost. Among acrylic adhesives, since it is specifically easy to control a peeling strength, a solvent type adhesive is preferable among a solvent type adhesive and an emulsion type adhesive. When a solution polymerization polymer as an acrylic solvent type adhesive is employed, well-known monomers may be used.

A polyvinyl butyral resin used for the intermediate layer of a laminated glass, or an ethylene-vinylacetate copolymer resin may be used, concrete examples of which include: plastic polyvinyl butyral (produced by Sekisui Chemical Co., Ltd. or Mitsubishi Monsanto Co.), an ethylene-vinylacetate copolymer (produced by Du Pont, Takeda Pharmaceutical Company, Ltd., or Duramine), and a modified ethylene-vinylacetate copolymer (produced by TOSOH CORP., or Melthene G). Further, an ultraviolet absorption agent, an anti-oxidant, an antistatic agent, a heat stabilizer, a lubricant, a filler, a colorant, and an adhesion adjustment agent may be added suitably to the adhesive layer.

### EXAMPLES

The present invention will be specifically explained with referring to Examples, however, the present invention is not limited thereto. In the Examples, the expression of "part" or "%" refers to "part by mass" or "% by mass", respectively, unless otherwise specified.

### Example 1

### <<Manufacture of Near-infrared reflective film>>

### [Preparation of Sample 1]

### (Formation of High refractive index layer 1)

In a solution in which 5 parts of guar gum and 5 parts of polyvinyl alcohol (PVA203, produced by KURARAY Co., Ltd.) were dissolved in 100 parts of water,100 parts of zirconia sol (NANOUSE® ZR-30-AR, produced by NISSAN CHEMICAL INDUSTRIES, LTD.) as a metal oxide was dispersed to obtain High refractive index layer coating liquid 1.

Then, High refractive index layer coating liquid 1 was applied on a polyethylene terephthalate film having a thickness of 50 µm under the condition that the dry thickness became 135 nm using a wire bar, followed by drying. Thus, High refractive index layer 1 was obtained.

### (Formation of Low refractive index layer 1)

In a solution in which 12 parts of polyvinyl alcohol (PVA203, produced by KURARAY Co., Ltd.) was dissolved in 100 parts of water, 100 parts of colloidal silica (SNOWTEX® OS, produced by NISSAN CHEMICAL INDUSTRIES, LTD.) as a metal oxide was dispersed to obtain Low refractive index layer coating liquid 1.

Then, Low refractive index layer coating liquid 1 was applied on the High refractive index layer 1 of the polyethylene terephthalate film having a thickness of 50 µm under the condition that the dry thickness became 175 nm using a wire bar, followed by drying. Thus, Low refractive index layer 1 was obtained.

### (Formation of laminate)

Subsequently, five layers of the High refractive index layer 1 and five layers of the Low refractive index layer 1 were laminated alternately to obtain Sample 1 having, in total, 12 layers.

### [Preparation of Sample 2]

Sample 2 was prepared in the same manner as the preparation of Sample 1 except that Low refractive index layer coating liquid 2 was used, in which the 12 parts ofpolyvinyl alcohol used in the preparation of Low refractive index layer coating liquid 1 was changed to 6 parts of polyvinyl alcohol and 6 parts of guar gum, and that the dry thickness was adjusted so that the optical thickness (namely, refractive index × thickness) became the same as the optical thickness of the Low refractive index layer 1.

### [Preparation of Sample 3]

Sample 3 was prepared in the same manner as the preparation of Sample 2 except that High refractive index layer 2 in which the zirconia sol used in the preparation of High refractive index layer 1 was changed to rutile-titanium oxide particles was used.

### [Preparation of Sample 4]

Sample 4 was prepared in the same manner as the preparation of Sample 3 except that High refractive index layer coating liquid 3 and Low refractive index layer coating liquid 3 in both of which the polyvinyl alcohol used in both the High refractive index layer coating liquid 2 and the Low refractive index layer coating liquid 2 was changed to the same amount of guar gum were used.

### [Preparation of Sample 5]

Sample 5 was prepared in the same manner as the preparation of Sample 3 except that High refractive index layer coating liquid 4 and Low refractive index layer coating liquid 4 in both of which the guar gum used in both the High refractive index layer coating liquid 2 and the Low refractive index layer coating liquid 2 was changed to the same amount of λ-carrageenan were used.

### [Preparation of Sample 6]

Sample 6 was prepared in the same manner as the preparation of Sample 3 except that High refractive index layer coating liquid 4 and Low refractive index layer coating liquid 4 in both of which the guar gum used in both the High refractive index layer coating liquid 2 and the Low refractive index layer coating liquid 2 was changed to the same amount of Roast Been Gum.

### [Preparation of Sample 7]

Sample 7 was prepared in the same manner as the preparation of Sample 6 except that High refractive index layer coating liquid 6 and Low refractive index layer coating liquid 6 were used, in which the High refractive index layer coating liquid 6 was prepared by changing 5 parts of polyvinyl alcohol used in the preparation of the High refractive index layer coating liquid 5 to 2.5 parts of polyvinyl alcohol and 2.5 parts of Emulsion resin (8) shown in Table 1, and the Low refractive index layer coating liquid 6 was prepared by changing 6 parts of polyvinyl alcohol used in the preparation of the Low refractive index layer coating liquid 5 to 3.0 parts of polyvinyl alcohol and 3.0 parts of Emulsion resin (8) shown in Table 1.

### [Preparation of Sample 8]

Sample 8 was prepared in the same manner as the preparation of Sample 3 except that High refractive index layer coating liquid 7 and High refractive index layer coating liquid 7 were used, in which the High refractive index layer coating liquid 7 was prepared by changing 5 parts of guar gum used in the preparation of the High refractive index layer coating liquid 2 to 2.5 parts of guar gum and 2.5 parts of Roast Been Gum, and the High refractive index layer coating liquid 7 was prepared by changing 6 parts of guar gum used in the preparation of the Low refractive index layer coating liquid 2 to 3.0 parts of Tamarind Seed Gum and 3 parts of Roast Been Gum.

### [Preparation of Sample 9]

Sample 9 was prepared in the same manner as the preparation of Sample 8 except that High refractive index layer coating liquid 8 and Low refractive index layer coating liquid 8 were used, in which the High refractive index layer coating liquid 8 was prepared by changing 5 parts of polyvinyl alcohol used in the preparation of the High refractive index layer coating liquid 7 to 2.5 parts of polyvinyl alcohol and 2.5 parts of Emulsion resin (8) shown in Table 1, and the Low refractive index layer coating liquid 8 was prepared by changing 6 parts of polyvinyl alcohol used in the preparation of the Low refractive index layer coating liquid 7 to 3.0 parts of polyvinyl alcohol and 3.0 parts of Emulsion resin (8) shown in Table 1.

### [Preparation of Sample 10]

Sample 10 was prepared in the same manner as the preparation of Sample 9 except that High refractive index layer coating liquid 9 and Low refractive index layer coating liquid 9 were used, in which the High refractive index layer coating liquid 9 was prepared in the same manner as the preparation of the High refractive index layer coating liquid 8 except that one part of glycine was added, and the Low refractive index layer coating liquid 9 was prepared in the same manner as the preparation of the Low refractive index layer coating liquid 8 except that one part of glycine was added.

### [Preparation of Sample 11: Comparative Example]

Sample 11 was prepared in the same manner as the preparation of Sample 3 except that High refractive index layer coating liquid 10 and Low refractive index layer coating liquid 10 were used, in which the High refractive index layer coating liquid 10 was prepared by changing whole of the guar gum used in the preparation of the High refractive index layer coating liquid 2 to polyvinyl alcohol, and the Low refractive index layer coating liquid 10 was prepared by changing whole of the guar gum used in the preparation of the Low refractive index layer coating liquid 2 to polyvinyl alcohol.

### [Preparation of Sample 12: Comparative Example]

### (Preparation of Dispersion liquid A)

Using 109 parts of rutile-titanium oxide (TTO-55A, particle diameter: 30 to 50 nm, being subjected to a surface treatment using aluminum hydroxide, and refractive index: 2.6, produced by Ishihara Sangyo Kaisha, Ltd.) as metal oxide particles, 11 parts of polyethylene imine block polymer as a dispersant, 180 parts of polypropylene glycol monomethylether acetate (hereafter, referred to as PGMEA, produced by Wako pure chemical Industries, Ltd.), and 141 parts of zirconia bead having an average diameter of 0.5 mm, dispersion was carried out using a bead mill disperser for 24 minutes, followed by further dispersing for 147 minutes using a bead mill disperser while changing to zirconia bead having an average diameter of 0.1 mm. Thus, Dispersion liquid A was obtained,

### (Preparation of Solution A)

Prepared was a PGMEA solution containing 50% by mass of 4,4'-bis(β-methacryloyl oxyethylthio) diphenylsulfone (having a refractive index of 1.65 after cured) as a binder resin and 0.25% by mass of 2,4,6-trimethylbenzoyl diphenylphosphineoxide as a polymerization initiator, which was designated as Solution A.

### (Preparation of Solution B)

A mixed solution of aforementioned Dispersion A and Solution A in a mixing ratio of 1 : 7 (in mass ratio) was prepared, which was designated as Solution B.

### (Preparation of Solution C)

A mixed solution of above Solution B and PGMEA in a mixing ratio of 1 : 2 (in mass ratio) was prepared, which was designated as Solution C

### <Formation of High refractive index layer A>

After coating the Solution C prepared as above by dropping 2 ml of the Solution C on a slide glass (76 mm × 52 mm, thickness of 1.3 mm, haze of 0.4%, produced by MATSUNAMI GLASS IND., LTD.) and by spin coating using a spin coater (1H-D7, produced by MIKASA CO., LTD.) with a condition of 1,000rpm for 30 seconds, the product was heated for 10 minutes at 120 °C. Then, the product was irradiated with ultraviolet radiation at an output power 184 W/cm and an integrated light quantity of 2.8 J/cm² using an electrodeless mercury lamp (produced by Fusion UV systems) to obtain High refractive index layer A. The refractive index of the High refractive index layer A was 2.10.

### (Formation of Low refractive index layer A)

The High refractive index layer A formed as described above was subjected to surface modification via a corona discharge treatment (Corona discharge surface treatment equipment, produced by SHINKO DENKI, INC.) Then, 2 ml of an aqueous solution of 1% by mass of hydroxyethyl cellulose (hereafter, abbreviated as HEC, produced by Tokyo Chemical Industry Co., Ltd.) was dropped, and, after leaving for one minute, spin coated for 30 seconds at 500 rpm. Just after coating, the sample was placed on a hot plate (HPD-3000, produced by AS ONE Corporation) at 80 °C for 10 minutes to heat, whereby Low refractive index layer A was laminated on the High refractive index layer A. The refractive index of Low refractive index layer A was 1.60.

### (Formation of Laminate)

Further, on the Low refractive index layer A, High refractive index layer A was formed to obtain Sample 12 containing the following 3 layers, namely, High refractive index layer A/Low refractive index layer A/High refractive index layer

### [Preparation of Sample 13: Comparative Example]

### (Support)

A polyethylene terephthlate film having a thickness of 50 µm (TEIJIN TETORON® FILM, a high transparency grade, produced by Teijin DuPont Films Japan Limited) was used. A corona discharge treatment was conducted on the surface to improve the wettability for the slurry.

### (Formation of High refractive index layer B)

After mixing 100 parts by mass of isopropyl alcohol (produced by WAKO PURE CHEMICAL INDUSTRIES, LTD., special grade chemical), 3 parts by mass of pyridine (produced by WAKO PURE CHEMICAL INDUSTRIES, LTD., special grade chemical), 5 parts by mass of an ethylsilicate solution (produced by COLCOAT CO., LTD., HAS-1, an effective component of 30% by mass), and 10 parts by mass of rutile-titanium oxide particles (produced by Ishihara Sangyo Kaisha, Ltd., 55N), the mixture was subjected to dispersion using a ball mill for 4 hours. When a dispersed particle diameter in D50 of 20 nm was confirmed, 1.5 parts by mass of an ultraviolet curable binder (produced by Shin-Etsu Chemical Co., Ltd., X-12-2400, an effective component of 30% by mass) and 0.15 part by mass of a catalyst (produced by Shin-Etsu Chemical Co., Ltd., DX-2400) were added, and the mixture was dispersed for one hour using a ball mill. When a dispersed particle diameter in D50 of 16 nm was confirmed, High refractive index layer coating liquid B was obtained. The coating liquid was applied on a polyethylene terephtalate film (also referred to as a PET film) having a thickness of 50 µm using a No. 08 bar coater so that the thickness after dried was 100 nm. After dried at 100 °C, the product was irradiated with ultraviolet light (intensity: from 200 to 450 mW/cm²) to harden, whereby High refractive index layer B was obtained. The refractive index of the High refractive index layer B was 2.17.

### (Formation of Low refractive index layer B)

One part by mass of silica sol having a particle diameter of 10 to 20 nm (the average particle diameter was 15 nm) (produced by NISSAN CHEMICAL INDUSTRIES, LTD., "IPA-ST"), 10 parts by mass of isopropyl alcohol (produced by WAKO PURE CHEMICAL INDUSTRIES, LTD., special grade chemical) as a solvent, 5 parts by mass of an ultraviolet light curable binder (produced by Shin-Etsu Chemical Co., Ltd., X-12-2400), and 0.6 part by mass of a catalyst (produced by Shin-Etsu Chemical Co., Ltd., DX-2400) were mixed, and stirred with a stirrer to obtain Low refractive index layer coating liquid B. The particle diameters of the primary particles of the silica sol (the refractive index was 1.45) were almost uniform. A slurry of which dispersed particle diameter in D50 was 45 nm was obtained.

Subsequently, on High refractive index layer B of the sample in which High refractive index layer was formed on a PET film, the Low refractive index layer coating liquid B prepared as described above was applied using a bar coater No. 08 so that the layer thickness after dried became 100 nm. After being dried at 100 °C, the product was irradiated with ultraviolet light (at an intensity of 200 to 450 mW/cm²) to be hardened, whereby Low refractive index layer B was formed. The refractive index of the formed Low refractive index layer B was 1.35.

### (Formation of Laminate)

Subsequently, three layers of the High refractive index layer B and five layers of the Low refractive index layer B were laminated alternately to obtain Sample 13 having, in total, 8 layers.

### [Preparation of Sample 14: Comparative Example]

### (Support)

A polyethylene terephthlate film having a thickness of 50 µm (TEIJIN TETORON® FILM, a high transparency grade, produced by Teijin DuPont Films Japan Limited) was used. A corona discharge treatment was conducted on the surface to improve the wettability for the slurry. The refractive index was 1.62.

### (Formation of High refractive index layer C)

Spherical rutile-titanium oxide having particles diameters of 10 to 30 nm (produced by ISHIHARA SANGYO KAISHA, LTD., TTO-51C) and methanol as a solvent were mixed in a volume ratio of 1 : 10 and dispersed to obtain High refractive index layer coating liquid C.

Then, High refractive index layer coating liquid C was applied on the above support under the condition that the thickness after dried became 230 nm using a wire bar, followed by drying. Thus, High refractive index layer C was obtained. The refractive index of the High refractive index layer C was 2.00.

### (Formation of Low refractive index layer C)

Spherical colloidal silica sol having particles diameters of 10 to 15 nm (an average particle diameter: 12 nm, produced by ISHIHARA SANGYO KAISHA, LTD., SNOWTEX® PS) and methanol as a solvent were mixed in a volume ratio of 1 : 10 and dispersed to obtain Low refractive index layer coating liquid C.

Then, Low refractive index layer coating liquid C was applied on High refractive index layer C formed on the support as described above under the condition that the thickness after dried became 230 nm using a bar coater, followed by drying. Thus, Low refractive index layer C was obtained. The refractive index of the High refractive index layer D was 1.25.

Next, using the High refractive index layer coating liquid C and the Low refractive index layer coating liquid C, lamination was conducted under the same condition on the High refractive index layer C to obtain a laminate containing the following 7 layer construction.

Support/High refractive index layer C/Low refractive index layer C/High refractive index layer C/Low refractive index layer C/High refractive index layer C/Low refractive index layer C/ High refractive index layer C.

### (Formation of uppermost layer)

Silica sol having particles diameters of 10 to 20 mn (an average particle diameter: 15 nm, produced by Nissan Chemical Industries, Ltd., methanol silica sol) and methanol as a solvent were mixed in a volume ratio of 1 : 20 and dispersed to obtain Low refractive index layer coating liquid D.

Then, Low refractive index layer coating liquid D was applied on High refractive index layer C of the laminate in which 7 refractive layers were formed on the substrate under the condition that the thickness after dried became 125 mn using a bar coater, followed by drying, whereby the outermost layer was formed. Thus, Sample 14 was obtained. The refractive index of the outermost layer was 1.35.

### [Evaluation of Near-infrared reflective film]

According to the following method, measurements of characteristic values and evaluation of the performance of the near-infrared reflective films prepared as above were carried out.

### (Measurement of refractive index of each layer)

A sample was prepared by singularly applying the objective layer of which refractive index was to be measured on a substrate, and the refractive indexes of the high refractive index layers and the low refractive index layers were determined according to the following method.

The light reflection from the back side of each sample was prevented by roughening the back surface of each sample before measurement, followed by conducting light absorbing treatment using a black spray. The refractive index was determined from the result of reflectivity measurement under the condition of 5° specular reflection using a spectrophotometer U-4000 (produced by HITACHI, LTD.) in the visible light region (400 nm-700 nm).

### (Measuremt of optical properties: measurement of visible light transmittance, and near-infrared reflectance)

Using the above spectrophotometer (U-4000, an integrating sphere was used, produced by HITACHI, LTD.), the light transmittance ant the reflectance of each near-infrared reflective film were measured in the region of 300 nm to 2000 nm. The transmittance at 550 nm was used as a visible light transmittance, and the reflectance at 1200 nm was used as a near-infrared reflectance.

### (Evaluation of Flexibility)

For each near-infrared reflective film prepared as above, 30 times of bending test was conducted via the method of flexibility test according to JIS K5600-5-1 using a flexibility testing apparatus Type 1 (IMC-AOF2, diameter of mandrell: 20 mm, produced by IMOTO MACHINERY CO., LTD.)

### <Measurement of variation range of near-infrared reflectance>

Subsequently, for a near-infrared reflective film having been subjected to the 30 times bending test, the near-infrared reflectance at 1200 nm was conducted in the same manner as described above, and the variation range (near-infrared reflectance (%) before the bending test - near-infrared reflectance (%) after the bending test) was determined. A smaller degradation range means that the flexibility is increased.

### <Observation of refractive layer>

The surface of a near-infrared reflective film having been subjected to 1000 times bending test was visually observed, and the flexibility was evaluated according to the following criteria.
A: No trace of bending nor crack was observed on the surface of the near-infrared reflective film.
B: Slight trace ofbending was observed on the surface of the near-infrared reflective film.
C: Minute cracks were observed on the surface of the near-infrared reflective film.
D: Apparent cracks were observed on the surface of the near-infrared reflective film.

The results of measurement and evaluation were summarized in Table 2.

**Table 2**

| Near-infrared reflective film No. | Construction of refractive layer | | | | | | Optical property | | Flexibility | | Remarks |
|---|---|---|---|---|---|---|---|---|---|---|---|
| | High refractive index layer | | Low refractive index layer | | Total number of laminate | Difference in refractive index *1 | Near-infrared in refractive (%) | Visible light transmittance (%) | Near-infrared variation rate (%) | Visual evaluation | |
| | No. | Refractive index | No. | Refractive index | | | | | | | |
| 1 | 1 | 1.83 | 1 | 1.47 | 12 | 0.36 | 80 | 83 | 2.4 | B | Inventive |
| 2 | 1 | 1.83 | 2 | 1.46 | 12 | 0.37 | 82 | 83 | 1.8 | B | Inventive |
| 3 | 2 | 1.86 | 2 | 1.46 | 12 | 0.40 | 90 | 82 | 1.6 | B | Inventive |
| 4 | 3 | 1.85 | 3 | 1.48 | 12 | 0.35 | 88 | 82 | 2.2 | B | Inventive |
| 5 | 4 | 1.80 | 4 | 1.46 | 12 | 0.34 | 84 | 80 | 2.7 | B | Inventive |
| 6 | 5 | 1.89 | 5 | 1.46 | 12 | 0.43 | 90 | 84 | 1.6 | B | Inventive |
| 7 | 6 | 1.90 | 6 | 1.46 | 12 | 0.44 | 89 | 83 | 0.7 | A | Inventive |
| 8 | 7 | 1.93 | 7 | 1.45 | 12 | 0.48 | 92 | 85 | 1.0 | A | Inventive |
| 9 | 8 | 1.91 | 8 | 1.45 | 12 | 0.46 | 91 | 84 | 0.5 | A | Inventive |
| 10 | 9 | 1.94 | 9 | 1.45 | 12 | 0.49 | 95 | 89 | 0.0 | A | Inventive |
| 11 | 10 | 1.84 | 10 | 1.47 | 12 | 0.37 | 88 | 81 | 32 | C | Comparative |
| 12 | A | 2.10 | A | 1.50 | 3 | 0.60 | 28 | 87 | 4.8 | D | Comparative |
| 13 | B | 2.17 | B | 1.35 | 8 | 0.82 | 82 | 84 | 5.5 | D | Comparative |
| 14(*2) | C | 2.00 | C | 1.25 | 8 | 0.75 | 97 | 82 | 12.0 | D | Comparative |

| | | | | | | | | | | | |
|---|---|---|---|---|---|---|---|---|---|---|---|
| *1: Refractive index of high refractive index layer - Refractive index of low refractive index layer *2: Refractive index of outermost layer: 1.35 | | | | | | | | | | | |

As is clear from the results described in Table 2, it can be understood that the near-infrared reflective films of the present invention show high near-infrared reflectances without lowering the transmittance of visible light, and excellent flexibility. On the other hand, it can be understood that near-infrared reflective films of Comparative examples prepared by using only a polymer, an ultraviolet light curable resin or a metal oxide sol for the refractive layer show only poor flexibility.

### Example 2

### [Preparation of Near-infrared reflector 1]

Near-infrared reflector 1 was prepared by using the near-infrared reflective film of Sample 8 prepared in Example 1. On a transparent acrylate resin plate having a thickness of 5 mm and a size of 20 cm × 20 cm, the near-infrared reflective film of Sample 8 was pasted with an acryl adhesive to obtain Near-infrared reflector 1.

### [Preparation of Near-infrared reflector 2]

Near-infrared reflector 2 was prepared by using the near-infrared reflective film of Sample 8 as described in Example 1. Two glass plates having a thickness of 2 mm and a size of 20 cm × 20 cm were prepared, and a laminate obtained by providing polyvinyl butyral of a thickness of 0.5 mm on both the surfaces of the near-infrared reflective film of Sample 8 was sandwiched by the two glass plates, followed by conducting a pressuring-heating treatment, whereby Near-infrared reflector 2 which was a laminated glass was obtained.

### [Evaluation]

Both the Near-infrared reflectors 1 and 2 as prepared above showed that the near-infrared reflective film is applicable to the near-infrared reflector. Even in cases of manufacturing such products, the near-infrared reflective film is easily applicable, irrespective of the size of the near-infrared reflector, and an excellent near-infrared reflecting property was confirmed, since a near-infrared reflecting film was used.

## Claims

1. A near-infrared reflective film comprising high refractive index layers and low refractive index layers alternately laminated on a support,
wherein
a difference in refractive indexes of the high refractive index layer and the low refractive index layer neighboring to each other is 0.3 or more, and
at least one of the high refractive index layers and the low refractive index layers comprises a metal oxide and a polysaccharide thickener.

2. The near-infrared reflective film of claim 1, wherein the polysaccharide thickener is at least one selected from tamarind seed gum, guar gum, tara gum, locust bean gum and arabinogalactan.

3. The near-infrared reflective film of claim 1 or 2, wherein the high refractive index layer or the low refractive index layer comprising the metal oxide and the polysaccharide thickener further comprises an emulsion resin.

4. The near-infrared reflective film of any one of claims 1 to 3, wherein the high refractive index layer or the low refractive index layer comprising the metal oxide and the polysaccharide thickener comprises two or more kinds of polysaccharides.

5. A near-infrared reflector comprising the near-infrared reflective film of any one of claims 1 to 4 provided on at least one surface of a substrate.
